# EUROPEAN PATENT APPLICATION

(11) **EP 3 096 231 A1**
(43) Date of publication of application: **23.11.2016**
(21) Application number: 14878825.0
(22) Date of filing: 17.01.2014
(51) Int. Cl.: G06F 13/00

(54) **IMAGE PROCESSING PROGRAM, IMAGE PROCESSING METHOD, AND IMAGE PROCESSING DEVICE**

(71) Applicant: Fujitsu Limited, Kawasaki-shi, Kanagawa 211-8588 (JP)
(72) Inventor: SHIMADA, Daichi, Kawasaki-shi Kanagawa 211-8588 (JP); HASHIMA, Masayoshi, Kawasaki-shi Kanagawa 211-8588 (JP)
(74) Representative: Chew, Kwan Chong Daniel
(86) International application number: PCT/JP2014/050765
(87) International publication number: WO 2015/107672

(57) **Abstract**

An image processing apparatus (101) updates an image to be displayed on a screen of an information processing apparatus (102) in response to receipt of operation input from the information processing apparatus (102). The image processing apparatus (101) periodically obtains image information of an image to be displayed on the screen of the information processing apparatus (102). At the time of obtaining image information of a preceding. image among two consecutive images, the image processing apparatus (101) does not determine whether to transmit image information of the preceding image. At the time of obtaining a subsequent image among the two consecutive images, the image processing apparatus (101) determines whether to transmit image information of the preceding image, based on image information of the preceding image and on image information of the subsequent image. The image processing apparatus (101) transmits image information of the preceding image when determining to transmit.

## Description

### TECHNICAL FIELD

The present invention relates to an image processing program, an image processing method, and an image processing apparatus.

### BACKGROUND ART

Conventionally, a server creates an image to be displayed on a screen of a client. The server creates the image based on operational input from a user of a client connected through a network and transmits image information of the created image to display the image on the screen of the client.

According to a known related art, for example, an operation is received, operation-content representation information representing the content of the received operation is generated, and the generated operation-content representation information is transmitted to another information processing apparatus. Another related art involves transmitting image data of a window having a non-display area as a result of superimposed display on the screen, the window is among plural windows to be displayed on a client terminal by a server and the data of the window is transmitted before the entire display of the window. According to another technique, server equipment determines a command transmitting order so as to preferentially execute the most-recent user operation while client equipment performs a process such as saving an image specified by a screen save command or re-displaying an image specified by a screen restore command.

Patent Document 1: Japanese Laid-Open Patent Publication No. 2011-028501
Patent Document 2: Japanese Laid-Open Patent Publication No. 2011-204089
Patent Document 3: Japanese Laid-Open Patent Publication No. 2008-129954

### DISCLOSURE OF INVENTION

### PROBLEM TO BE SOLVED BY THE INVENTION

In the above prior arts, however, if image information of an image is frequently transmitted from the server to the client, load on the network between the server and the client may become significant, resulting in increased transmission time and packet loss.

According to one aspect, an object of the present invention is to provide an image processing program, an image processing method, and an image processing apparatus that reduce load on a network.

### MEANS FOR SOLVING PROBLEM

According to one aspect of the present invention an image processing program, an image processing method, and an image processing apparatus are provided that determine based on image information of two images, whether to transmit to an information processing apparatus, image information of a preceding image among the two images that are consecutive in display order and to be displayed on a screen of the information processing apparatus connected via a network; and transmit image information of the preceding image to the information processing apparatus when determining to transmit image information of the preceding image.

### EFFECT OF THE INVENTION

According to one aspect, an object of the present invention is to provide an image processing program, an image processing method, and an image processing apparatus that reduce load on a network.

### BRIEF DESCRIPTION OF DRAWINGS

FIG. 1 is an explanatory view of one example of an image processing apparatus 101 according to an embodiment;
FIG. 2 is a block diagram of an example of hardware configuration of a computer 200;
FIG. 3 is a block diagram of an example of functional configuration of the image processing apparatus 101;
FIG. 4 is an explanatory view of an example of a series of images to be displayed on a screen of an information processing apparatus 102;
FIG. 5 is an explanatory view of an example in which the image processing apparatus 101 transmits image information;
FIG. 6 is a flowchart depicting an example of an image processing procedure;
FIG. 7 is a flowchart depicting an example of a determination procedure; and
FIG. 8 is a flowchart depicting an example of a display procedure.

### BEST MODE(S) FOR CARRYING OUT THE INVENTION

Embodiments of an image processing program, an image processing method, and an image processing apparatus according to the present invention will be described in detail with reference to the accompanying drawings.

### (Example of Image Processing Apparatus 101)

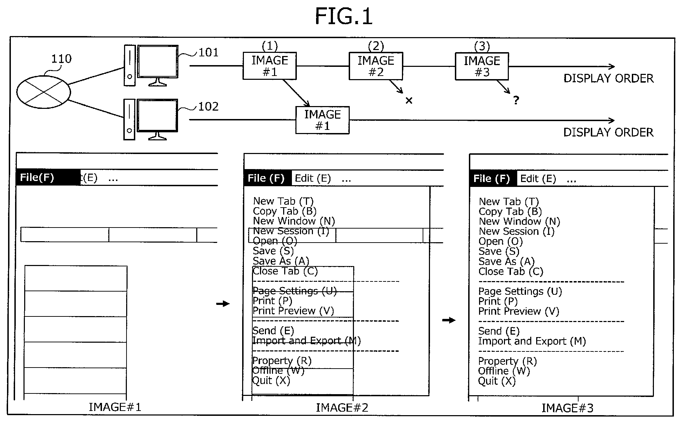

FIG. 1 is an explanatory view of one example of an image processing apparatus 101 according to an embodiment.

In FIG. 1, the image processing apparatus 101 is a computer that executes the image processing program according to the embodiment to thereby determine whether to transmit to an information processing apparatus 102, image information of an image to be displayed on a screen of the information processing apparatus 102. The image processing apparatus 101 and the information processing apparatus 102 are connected via a network 110.

As used herein, image information is information for causing the information processing apparatus 102 to display an image. The image information is, for example, information indicating the pixel values of pixels included in an image. The image information may be, for example, information indicating the pixel values of pixels included in the entire image, or information indicating the pixel values of pixels included on the screen of the information processing apparatus 102 in a region whose display content is updated as a result of display of an image. The image processing apparatus 101 is, for example, a computer that acts as a server implementing a thin client technique.

The thin client technique is a technique of having a server store software or data so that the server can create image information of an image to be displayed on a client screen in response to receiving, for example, client-user operation input from the client and transmit the created image information to the client. The thin client technique is, for example, a remote-desktop technique.

For example, based on operation input of the user of the information processing apparatus 102, received from the information processing apparatus 102, the image processing apparatus 101 executes an operating system (OS), computer aided design software, etc. included in the image processing apparatus 101. The image processing apparatus 101 then updates image information of an image to be displayed on the screen of the information processing apparatus 102, to image information of an image corresponding to the content of the operation input. The image processing apparatus 101 periodically captures image information of an image to be displayed on the screen of the information processing apparatus 102, updates the image information corresponding to the contents of the operation input, and transmits the image information to the information processing apparatus 102. The image processing apparatus 101 may be a notebook computer, a desktop computer, a server, etc.

The information processing apparatus 102 is a computer that receives image information of an image from the information processing apparatus 102 and displays the image on a screen included in the information processing apparatus 102. The information processing apparatus 102 is, for example, a computer acting as a client utilizing the thin client technique.

For example, the information processing apparatus 102 transmits operation input of the user of the information processing apparatus 102 to the information processing apparatus 102, receives image information of an image corresponding to the contents of the operation input, and displays the image on the screen included in the information processing apparatus 102. The information processing apparatus 102 may be a notebook computer, a desktop computer, a cellular phone, a smartphone, a personal handyphone system (PHS), a tablet terminal, etc.

In the example depicted in FIG. 1, the information processing apparatus 102 displays on the screen of the information processing apparatus 102, an image of a browser for browsing a web page. Here, the information processing apparatus 102 is assumed to receive from the user of information processing apparatus 102, operation input selecting an item "file (F)" on a menu bar representing a menu in the image of the browser, and to transmit the operation input to the image processing apparatus 101.

On the other hand, when receiving the operation input, the image processing apparatus 101 updates the image to be displayed on the screen of the information processing apparatus 102, in the order of image #1→image #2→image #3. Here, the image #1 is an image of the browser displaying the item "file (F)" of the menu bar in black-and-white inversion. The image #2 is an image of the browser that displays, in a semi-transparent mode, a pop-up representing a submenu related to the item "file (F)". The image #3 is an image of the browser that displays the pop-up representing the submenu related to the item "file (F)". The image processing apparatus 101 periodically captures image information of images to be displayed on the screen of the information processing apparatus 102 and updated in the order of image #1→image #2→image #3, and determines whether to transmit the image information.

For example, (1) the image processing apparatus 101 obtains image information of the browser image #1. Here, the image processing apparatus 101 waits until image information of the browser image #2 to be displayed subsequent to the browser image #1 is obtained, without transmitting the image information of the browser image #1 to the information processing apparatus 102.
(2) The image processing apparatus 101 obtains the image information of the browser image #2. The image processing apparatus 101 then determines whether to transmit the browser image #1, based on the browser image #1 and the browser image #2.
   For example, if the browser image #1 is similar to the browser image #2, the image processing apparatus 101 determines not to transmit the image information of the browser image #1. If the browser image #1 is not similar to the browser image #2, the image processing apparatus 101 determines to transmit the image information of the browser image #1.
   Here, the browser image #1 is assumed to not be similar to the browser image #2, therefore, the image processing apparatus 101 determines to transmit the image information of the browser image #1, and transmits the image information of the browser image #1 to the information processing apparatus 102.
   Here, the image processing apparatus 101 waits until image information of the browser image #3 to be displayed subsequent to the browser image #2 is obtained, without transmitting image information of the browser image #2 to the information processing apparatus 102.
(3) The image processing apparatus obtains the image information of the browser image #3. The image processing apparatus 101 then determines whether to transmit the image information of the browser image #2, based on the browser image #2 and the browser image #3.

In this case, since the browser image #2 is similar to the browser image #3, the image processing apparatus 101 determines not to transmit the image information of the browser image #2, and discards the image information of the browser image #2.

Here, the image processing apparatus 101 waits until image information of a browser image #4 (not depicted) to be displayed subsequent to the browser image #3 is obtained, without transmitting image information of the browser image #3 to the information processing apparatus 102.

This enables the image processing apparatus 101 to reduce the amount of data to be transmitted to the information processing apparatus 102 and thereby, suppresses congestion on the network 110 between the image processing apparatus 101 and the information processing apparatus 102. Since the image processing apparatus 101 omits the transmission of image information of a preceding image that is overwritten by a similar subsequent image, a feeling of strangeness that the user of the information processing apparatus 102 may experience while the screen of the information processing apparatus 102 is being updated may be reduced.

Therefore, even when the image processing apparatus 101 is connected to the information processing apparatus 102 through the low-quality network 110, interruption of screen updating at the information processing apparatus 102 consequent to a discarding of image information of the image arising from packet loss, may be suppressed. Even when the image processing apparatus 101 is connected to the information processing apparatus 102 through the low-quality network 110, the occurrence of packets awaiting transmission may be suppressed, whereby decreases in response performance with respect to the information processing apparatus 102 may be suppressed.

### (Example of Hardware Configuration of Computer 200)

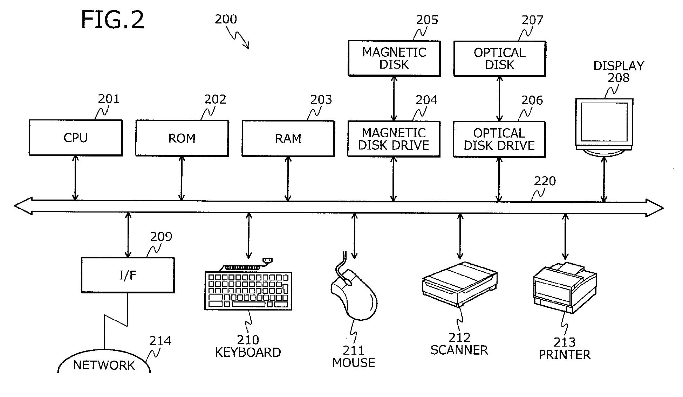

An example of hardware configuration of a computer 200 implementing the image processing apparatus 101 or the information processing apparatus 102 will be described with reference to FIG. 2.

FIG. 2 is a block diagram of an example of hardware configuration of the computer 200. In FIG. 2, a computer 200 includes a central processing unit (CPU 201), read-only memory (ROM) 202, and random access memory (RAM) 20.

The computer 200 further includes magnetic disk drive (hard disk drive) 204, a magnetic disk 205, an optical disk drive 206, and an optical disk 207. Further, the computer 200 includes a display 208, an interface (I/F) 209, a keyboard 210, a mouse 211, a scanner 212, and a printer 213. Further, these components are connected by a bus 220.

Here, the CPU 201 governs overall control of the computer 200. The ROM 202 stores programs such as a boot program. The ROM 202 stores at least the image processing program according to the present embodiment, when the computer 200 implements the image processing apparatus 101. The RAM 203 is used as a work area of the CPU 201. The RAM 203 may include video RAM (VRAM). The RAM 203, for example, stores image information of an image that is to be displayed on a screen of the information processing apparatus 102, the image information being updated corresponding to the contents of operational input.

The magnetic disk drive 204, under the control of the CPU 201, controls the reading and writing of data with respect to the magnetic disk 205. The magnetic disk 205 stores the data written thereto under the control of the magnetic disk drive 204.

The optical disk drive 206, under the control of the CPU 201, controls the reading and writing od data with respect to the optical disk 207. The optical disk 207 stores data written thereto under the control of the optical disk drive 206, the data stored by the optical disk 207 being read in by the computer 200.

The display 208 displays data such as documents, images, and functional information, in addition to a cursor, icons, and toolboxes. The display 208, for example, may be a liquid crystal display, a plasm display, or the like.

The I/F 209 is connected through a communications network to a network 214 such as a local area network (LAN), a wide area network (WAN), and the Internet, and is connected to other devices through the network 214. The I/F 209 administers an internal interface with the network 214 and controls the input and output of data from external devices. The I/F 209, for example, may be a modem, a LAN adapter, or the like.

The keyboard 210 has keys for inputting text, numerals, various instructions, etc., and performs the input of data. The keyboard 210 may be a touch panel input pad or numeric pad. The mouse 211 is used to move the cursor, select ranges, move and change the size of windows, and the like. A track ball or a joy stick may be adopted provided each respectively has a function similar to a pointing device.

The scanner 212 optically reads an image and takes in the image data into the computer 200. The scanner 212 may have an optical character recognition (OCR) function as well. The printer 213 prints image data and text data. The printer 213 may be, for example, a laser printer or an ink jet printer. Further, one or more among the optical disk drive 206, the optical disk 207, the display 208, the keyboard 210, the mouse 211, the scanner 212, and the printer 213 may be omitted.

### (Example of Functional Configuration of Image Processing Apparatus 101)

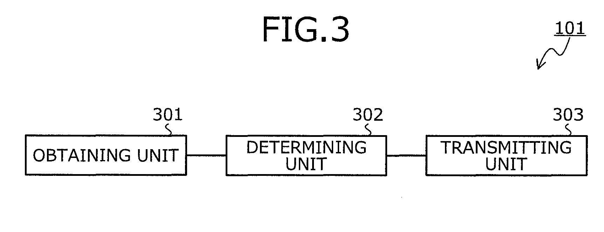

An example of functional configuration of the image processing apparatus 101 will be described with reference to FIG. 3. FIG. 3 is a block diagram of an example of functional configuration of the image processing apparatus 101. The image processing apparatus 101 includes, as control unit functions, an obtaining unit 301, a determining unit 302, and a transmitting unit 303.

The obtaining unit 301 periodically obtains image information of an image representing a screen of the information processing apparatus 102, whose display content is updated in response to an operation input from the information processing apparatus 102 connected via the network 110. As used herein, the operation input refers to information that the user of the information processing apparatus 102 inputs using a mouse or a keyboard of the information processing apparatus 102. The operation input is, for example, a request to display a web page. The operation input is, for example, a command for software such as CAD software. The operation input is, for example, a video playback request. The screen is a display area on the display of the information processing apparatus 102. The display area on the display may be the entire area on the display or may be a partial area on the display. The image representing the screen of the information processing apparatus 102 is an image to be displayed on the screen of the information processing apparatus 102.

The image information is information for causing the information processing apparatus 102 to display an image. The image information is, for example, information indicating the pixel values of pixels included in an image. For example, the image information may be information indicating the pixel values of pixels included in the entire image or may be information indicating the pixel values of pixels included in an area, whose display content is updated as a result of display of an image, on the screen of the information processing apparatus 102. Periodically obtaining is obtaining image information at predetermined time intervals. The predetermined time intervals may be, for example, a fixed time interval calculated based on the frame rate or a variable time interval calculated based on the frame rate.

For example, when obtaining image information, if the image information has no change from the most-recently obtained image information, the obtaining unit 301 waits for the same time interval as the frame rate, and thereafter transitions to obtain the next image information. When obtaining image information, if the image information has a change from the most-recently obtained image information, the obtaining unit 301 waits for a time interval that is shorter than the frame rate, and thereafter transitions to obtain the next image information.

Periodically, the obtaining unit 301 accesses and obtains image information that is stored in a storage area such as the magnetic disk 205 or the optical disk 207, and whose content is updated in response to an operation input. As a result, the obtaining unit 301 can obtain image information of an image to be displayed on the screen of the information processing apparatus 102. Obtained data is stored to, for example, a storage area such as the RAM 203, the magnetic disk 205, and the optical disk 207. The obtaining unit 301 implements a function thereof, for example, by the CPU 201 executing a program stored in a storage device such as the ROM 202, the RAM 203, the magnetic disk 205, and the optical disk 207 depicted in FIG. 2.

Based on image information of two images, consecutive in the display order and to be displayed on the screen of the information processing apparatus 102, the determining unit 302 determines whether to transmit to the information processing apparatus 102, image information of the preceding image among the two images. As used herein, the display order is the order to determine whether to transmit the image information. The display order is, for example, the order in which the image information is obtained by the obtaining unit 301. The preceding image is an image precedent in the display order among two images. The preceding image is, for example, the image obtained first among two images.

For example, based on image information of two images, whose image information is consecutively obtained, the determining unit 302 determines whether to transmit image information of the preceding image among the two images. For example, when the obtaining unit 301 obtains the preceding image, the determining unit 302 waits until the obtaining unit 301 obtains the subsequent image subsequent to the preceding image, to determine whether to transmit image information of the preceding image, based on image information of the two images, i.e. the preceding image and the subsequent image.

For example, the determining unit 302 calculates the similarity between the two images, based on the image information, and determines whether to transmit image information of the preceding image to the information processing apparatus 102, based on the calculated similarity. The similarity is, for example, an L1-norm or L2-norm. The similarity may be, for example, peak signal to noise ratio (PSNR) or structural similarity (SSIM).

In the L1-norm and L2-norm, a smaller value indicates a higher similarity between two images. In PSNR and SSIM, a larger value indicates a higher similarity between two images. The L1-norm, L2-norm, and PSNR take on a value of 0 to ∞. SSIM takes on a value of 0 to 1.

For example, the determining unit 302 calculates an L1-norm, based on the image information, and when the calculated L1-norm is less than a predetermined value, determines not to transmit image information of the preceding image since the two images are similar. When the calculated L1-norm is the predetermined value or greater, the determining unit 302 determines to transmit image information of the preceding image since the two images are dissimilar. In other words, the determining unit 302 determines not to transmit image information of the preceding image, when a similar subsequent image becomes an object of display immediately after the preceding image has become the object of display. Thus, the determining unit 302 determines not to transmit image information of the preceding image in cases where the user of the information processing apparatus 102 will experience a minimal feeling of strangeness even though the information processing apparatus 102 omits display of the preceding image.

For example, the determining unit 302 specifies in a screen of the information processing apparatus 102, a first area whose display content is changed by displaying on the screen of the information processing apparatus 102, a preceding image among two images. The determining unit 302 specifies on the screen of the information processing apparatus 102, a second area whose display content is changed by displaying the subsequent image on the screen of the information processing apparatus 102. The determining unit 302 determines not to transmit image information of the preceding image if the first area is encompassed by the second area.

For example, based on image information of the most-recently transmitted image and on image information of the preceding image obtained by the obtaining unit 301, the determining unit 302 specifies on a screen of the information processing apparatus 102, the first area whose display content is changed by displaying the preceding image on the screen. Based on image information of the most-recently transmitted image and on image information of the subsequent image obtained by the obtaining unit 301, the determining unit 302 specifies on a screen of the information processing apparatus 102, the second area whose display content is changed by displaying the subsequent image on the screen. The determining unit 302 determines not to transmit image information of the preceding image if the first area is encompassed by the second area. The determining unit 302 determines to transmit image information of the preceding image if the first area is not encompassed by the second area. In other words, the determining unit 302 determines not to transmit image information of the preceding image if the preceding image is overwritten by the subsequent image. As a result, the determining unit 302 can determine not to transmit image information of the preceding image in cases where the user of the information processing apparatus 102 will experience a minimal feeling of strangeness even though the information processing apparatus 102 omits display of the preceding image.

For example, the determining unit 302 determines whether to transmit image information of the preceding image, based on similarity between the two images and on whether the first area is encompassed by the second area. For example, the determining unit 302 determines not to transmit image information of the preceding image if the L1-norm is less than a predetermined value and if the first area is encompassed by the second area. The determining unit 302 determines to transmit image information of the preceding image if the L1-norm is the predetermined value or greater and if the first area is not encompassed by the second area. In other words, the determining unit 302 determines not to transmit image information of the preceding image if the preceding image is overwritten by a similar subsequent image. As a result, the determining unit 302 can determine not to transmit image information of the preceding image in cases where the user of the information processing apparatus 102 will experience a minimal feeling of strangeness even though the information processing apparatus 102 omits display of the preceding image.

The determining unit 302 measures the elapsed time from the most-recent receipt of operation input and, if the measured elapsed time is a predetermined time or greater, determines to transmit image information of the preceding image to the information processing apparatus 102. For example, irrespective of the similarity between two images and whether the first area is encompassed by the second area, the determining unit 302 determines to transmit image information of the preceding image if the elapsed time is the predetermined time or greater. This allows the determining unit 302 to transmit image information of an image in the case of display of a series of similar images or in the case of receipt of operation input such as a request to play back a video in which the same area continues to be updated in the screen.

The determining unit 302 counts the number of times that the determining unit consecutively determines not to transmit image information. The determining unit 302 determines that image information of a preceding image is to be transmitted to the information processing apparatus 102 when the counted number of times is the predetermined count or greater. In this case, the predetermined count may be, for example, a fixed count or a variable count. In the following description, the counted number of times may be referred to as "transmission cancellation count". The predetermined count may be referred to as "maximum transmission cancellation count".

For example, the determining unit 302 determines that image information of a preceding image is to be transmitted when the number of determinations not to transmit is the predetermined count or greater, irrespective of the similarity between the two images and whether the first area is encompassed by the second area. This allows the determining unit 302 to transmit image information of an image in the case of display of a series of similar images or in the case of receipt of operation input such as a request to play back a video in which the same area continues to be updated in the screen. The determination result is stored to a storage area such as the RAM 203, the magnetic disk 205, and the optical disk 207. The determining unit 302 implements a function thereof by, for example, the CPU 201 executing a program stored in a storage device such the RAM 203, the magnetic disk 205, and the optical disk 207 depicted in FIG. 2.

The transmitting unit 303 transmits image information of a preceding image to the information processing apparatus 102 if the determining unit 302 determines that image information of the preceding image is to be transmitted. The image information to be transmitted herein is, for example, information indicating the pixel values of pixels included in the entire image obtained by the obtaining unit 301. The image information to be transmitted may be, for example, information indicating the pixel values of pixels included in an area whose display content is updated by displaying an image on the screen of the information processing apparatus 102, created from information indicating the pixel values of pixels included in the entire image.

Thus, the transmitting unit 303 is able to provide a preceding image for display on the screen of the information processing apparatus 102. Since the transmitting unit 303 does not transmit image information of the preceding image to the information processing apparatus 102 when the determining unit 302 determines that the image information is not to be transmitted, the amount of data to be transmitted to the information processing apparatus 102 may be reduced. Thus, the transmitting unit 303 can suppress congestion of the network between the image processing apparatus 101 and the information processing apparatus 102. The transmitting unit 303 implements a function thereof by, for example, the I/F 209 or by the CPU 201 executing a program stored in a storage device such as the ROM 202, the RAM 203, the magnetic disk 205, and the optical disk 207 depicted in FIG. 2.

### (Example of Image Processing in Image Processing Apparatus 101)

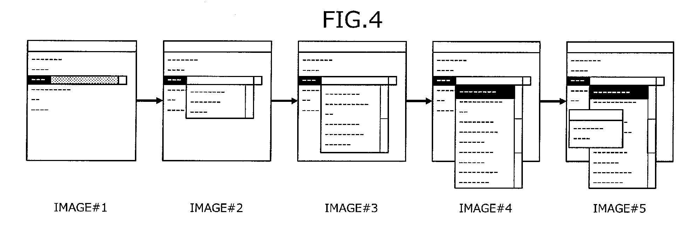

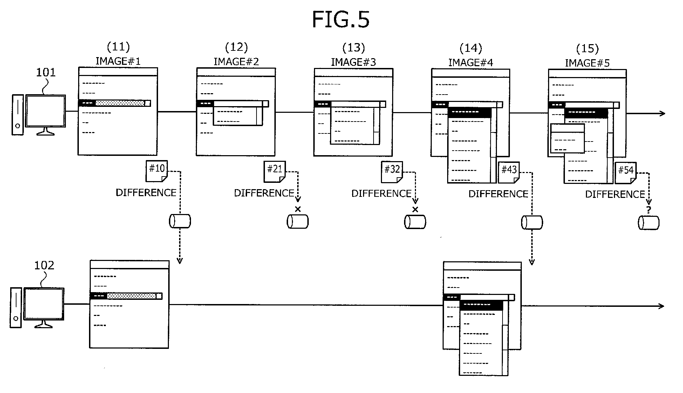

An example of image processing in the image processing apparatus 101 will be described with reference to FIGs. 4 and 5.

FIG. 4 is an explanatory view of an example of a series of images to be displayed on a screen of the information processing apparatus 102. The example of FIG. 4 represents a case where after receipt of an operation input requesting display of a pulldown menu of a first window from the information processing apparatus 102, the image processing apparatus 101 receives therefrom, operation input requesting display of a second window different from the first window.

In this case, the image processing apparatus 101 updates the image to be displayed on the screen of the information processing apparatus 102, in the order of image #1→image #2→image #3→image #4→image #5. The image #1 is an image that displays the first window containing a menu bar of a pulldown menu.

The image #2 is an image that displays the lower part of the pulldown menu, representing the state where the pulldown menu is displayed by animation. The image #3 is an image that displays parts from middle to bottom part of the pulldown menu, representing the state where the pulldown menu is displayed by animation. The image #4 is an image that displays parts from upper to lower parts of the pulldown menu, representing the state where the pulldown menu is displayed in animation.

The image #5 is an image that displays the second window on top of the first window. In the following description, an image (not depicted) displayed immediately before the image #1 may be referred to as "image #0". An image (not depicted) to be displayed immediately after the image #3 may be referred to as "image #4".

FIG. 5 is an explanatory view of an example in which the image processing apparatus 101 transmits image information. In the example of FIG. 5, the image processing apparatus 101 periodically obtains image information of an image to be displayed on the screen of the information processing apparatus 102, that is updated in the order of (image #0→) image #1→image #2→image #3→image #4→image #5.

For simplicity of explanation, the image processing apparatus 101 is assumed to obtain image information of each of the images #1 to #5 one by one. The image processing apparatus 101 then determines whether to transmit to the information processing apparatus 102, information for displaying on the screen of the information processing apparatus 102, an image to be displayed on the screen.
(11) At the time when the image processing apparatus 101 obtains image information of the image #1, the image processing apparatus 101 does not determine whether to transmit to the information processing apparatus 102, information for displaying the image #1 on the screen, whereas at the time when the image processing apparatus 101 obtains image information of the image #2, the image processing apparatus 101 determines whether to transmit the information.
   For example, based on previously obtained image information of image #0 (not depicted) and on previously obtained image information of the image #1, the image processing apparatus 101 specifies in the screen, a first area whose display content is updated by displaying the image #1 on the screen. Based on image information of the image #1 and on obtained image information of the image #2, the image processing apparatus 101 specifies in the screen, a second area whose display content is updated by displaying the image #2 on the screen. Next, based on image information of the image #1 and on image information of the image #2, the image processing apparatus 101 calculates an L1-norm as the similarity between the image #1 and image #2.
   The image processing apparatus 101 then determines whether the first area is encompassed by the second area and if the similarity is the predetermined value or greater. Since the first area is not encompassed in this case, the image processing apparatus 101 determines to transmit information for displaying the image #1. The image processing apparatus 101 therefore transmits to the information processing apparatus 102, differential information #10 of image information of the image #1 and image information of the most-recent image #0 (not depicted), instead of image information of the image #1.
(12) At the time when the image processing apparatus 101 obtains image information of the image #2, the image processing apparatus 101 does not determine whether to transmit information for displaying the image #2 on the screen to the information processing apparatus 102, whereas at the time when the image processing apparatus 101 obtains image information of the image #3, the image processing apparatus 101 determines whether to transmit the information.
   For example, based on image information of the image #1 and on image information of the image #2, the image processing apparatus 101 specifies in the screen, a first area whose display content is changed by displaying the image #2 on the screen. Based on image information of the image #2 and on image information of the image #3, the image processing apparatus 101 specifies in the screen, a second area whose display content is changed by displaying the image #3 on the screen. The image processing apparatus 101 calculates an L1-norm as the similarity between the image #2 and the image #3, based on image information of the image #2 and on image information of the image #3.
   The image processing apparatus 101 determines whether the first area is encompassed by the second area and the similarity is the predetermined value or greater. In this case, since the first area is encompassed and the similarity is the predetermined value or greater, the image processing apparatus 101 determines not to transmit information for displaying the image #2. Accordingly, the image processing apparatus 101 does not transmit differential information #21 between image information of the image #2 and image information of the most-recent image #1.
(13) At the time when obtaining image information of the image #3, the image processing apparatus 101 does not determine whether to transmit to the information processing apparatus 102, information for displaying the image #3 on the screen, but rather at the time when obtaining image information of the image #4, determines whether to transmit the information.
   For example, based on image information of the image #2 and on image information of the image #3, the image processing apparatus 101 specifies in the screen, a first area whose display content is changed by displaying the image #3 on the screen. Based on image information of the image #3 and on image information of the image #4, the image processing apparatus 101 specifies in the screen, a second area whose display content is changed by displaying the image #4 on the screen. The image processing apparatus 101 calculates an L1-norm as the similarity between the image #3 and the image #4, based on image information of the image #3 and on image information of the image #4.
   The image processing apparatus 101 then determines whether the first area is encompassed by the second area and the similarity is the predetermined value or greater. In this case, since the first area is encompassed and the similarity is the predetermined value or greater, the image processing apparatus 101 determines not to transmit information for displaying the image #3. Accordingly, the image processing apparatus 101 does not transmit differential information #32 of image information of the image #3 or image information of the most-recent image #2.
(14) At the time when obtaining image information of the image #4, the image processing apparatus 101 does not determine whether to transmit to the information processing apparatus 102, information for displaying the image #4 on the screen but rather at the time when obtaining image information of the image #5, determines whether to transmit the information.

For example, based on image information of the image #3 and on image information of the image #4, the image processing apparatus 101 specifies in the screen, a first area whose display content is changed by displaying the image #4 on the screen. Based on image information of the image #4 and on image information of the image #5, the image processing apparatus 101 specifies in the screen, a second area whose display content is changed by displaying the image #5 on the screen. The image processing apparatus 101 then calculates an L1-norm as the similarity between the image #4 and the image #5, based on image information of the image #4 and on image information of the image #5.

The image processing apparatus 101 then determines whether the first area is encompassed by the second area and the similarity is the predetermined value or greater. Since the first area is not encompassed in this case, the image processing apparatus 101 determines to transmit information for displaying the image #4. Accordingly, the image processing apparatus 101 transmits to the information processing apparatus 102, differential information #43 of the image information of the image #4 and the image information of the image #3, instead of the image information of the image #4.

At the time when obtaining image information of the image #5, the image processing apparatus 101 does not determine whether to transmit to the information processing apparatus 102, information for displaying an image of the image #5 on the screen. This enables the image processing apparatus 101 to reduce the amount of data to be transmitted to the information processing apparatus 102 and thus, suppress congestion on the network 110 between the image processing apparatus 101 and the information processing apparatus 102.

Thus, the image processing apparatus 101 can suppress the occurrence of packet loss and interruption of screen updating at the information processing apparatus 102, in a case where the image processing apparatus 101 is connected to the information processing apparatus 102 via the low-quality network 110. The image processing apparatus 101 can suppress the occurrence of the packets awaiting transmission and thus suppress decreases in response performance with respect to the information processing apparatus 102, in a case where the image processing apparatus 101 is connected to the information processing apparatus 102 via the low-quality network 110.

### (Example of Image Processing Procedure)

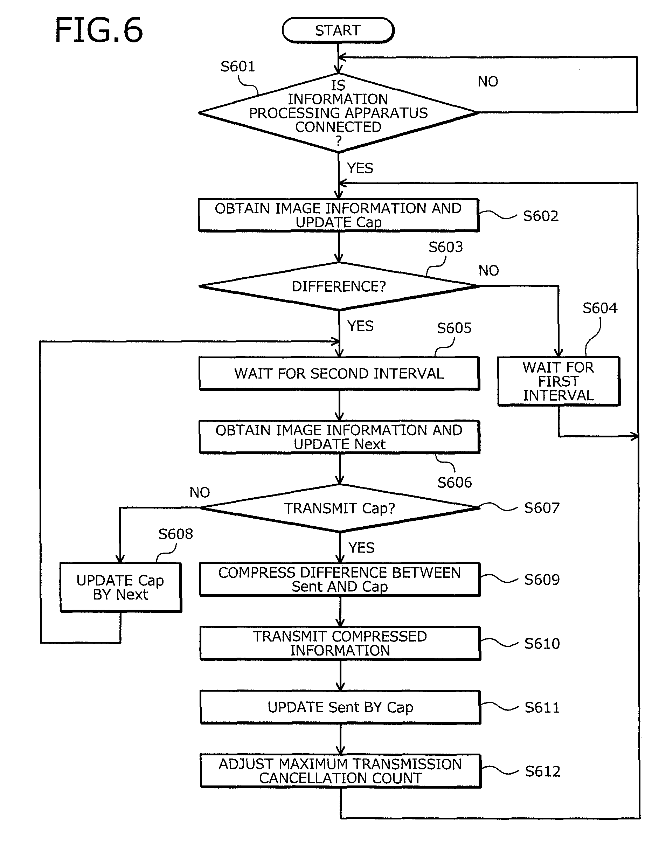

An example of image processing procedure of the image processing apparatus 101 will be described with reference to FIG. 6.

FIG. 6 is a flowchart depicting an example of the image processing procedure. In FIG. 6, the image processing apparatus 101 determines whether the image processing apparatus 101 is connected to the information processing apparatus 102 via the network 110 (step S601). If not connected (step S601: NO), the image processing apparatus 101 returns to the operation at step S601.

On the other hand, if connected (step S601: YES), the image processing apparatus 101 obtains image information of an image representing a screen whose display content is updated in response to an operation input and updates image information Cap of an image to be displayed on the screen (step S602).

The image processing apparatus 101 determines whether there is a difference between image information Sent of the most-recently transmitted image and the image information Cap to be displayed on the screen (step S603). If there is no difference (step S603: NO), the image processing apparatus 101 waits for a first interval (step S604), and returns to the operation at step S602.

The first interval is, for example, the same interval as the frame rate. In the following description, the same interval as the frame rate may be referred to as "specified interval". The first interval may be a variable interval that is half of the specified interval when the most-recent image information is not to be transmitted and that is the specified interval when the most-recent image information is to be transmitted.

On the other hand, if there is a difference (step S603: YES), the image processing apparatus 101 waits for a second interval (step S605) and obtains image information of an image representing a screen to thereby update image information Next of an image to be displayed next on the screen (step S606).

In this case, the second interval is an interval that is shorter than the specified interval so that the update interval is not delayed in the information processing apparatus 102. The second interval may be a variable interval that is half of the specified interval when the most-recent image information is not to be transmitted and that is the specified interval when the most-recent image information is to be transmitted.

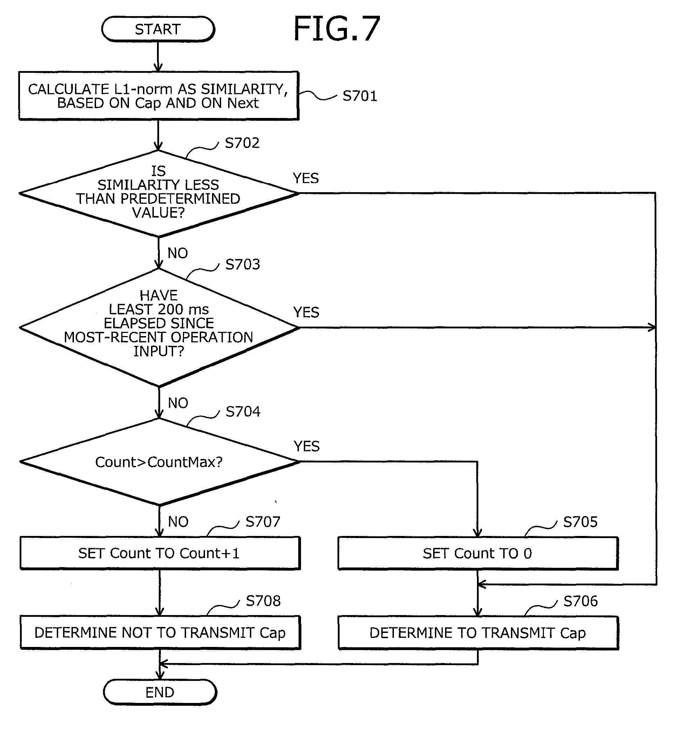

The image processing apparatus 101 then determines whether to transmit image information Cap of an image to be displayed on the screen (step S607). A determination process for determining whether to transmit the image information Cap will be described later with reference to FIG. 7.

If the image information Cap is not to be transmitted (step S607: NO), the image processing apparatus 101 updates the image information Cap of an image to be displayed on the screen by image information Next of an image to next be displayed on the screen (step S608), returning to the operation at step S605.

On the other hand, if the image information Cap is to be transmitted (step S607: YES), the image processing apparatus 101 compresses information of a difference between image information Sent of a most-recently transmitted image and image information Cap of an image to be displayed on the screen (step S609) and transmits the compressed information to the information processing apparatus 102 (step S610).

The image processing apparatus 101 updates based on the image information Cap of the image to be displayed on the screen, the image information Sent of the most-recently transmitted image (step S611). The image processing apparatus 101 adjusts a maximum transmission cancellation count CountMax (step S612), and returns to the operation at step S602.

At step S612, for example, the image processing apparatus 101 calculates the maximum transmission cancellation count CountMax by a calculation formula "max(1-RTT,DataSize/BW)×FPS".

Herein, max(x,y) is a function for selecting and outputting the greatest variable between variables x and y. RTT is a delay time [seconds] when packet loss occurs. DataSize is the amount of data [byte] of the most-recently transmitted information. BW is a bandwidth [byte/second]. FPS is a frame rate and is a count of screen updating per second [number-of-times/second]. RTT, BW, etc. may be received as network information from the information processing apparatus 102.

For example, in a virtual desktop environment, DataSize=100[kilobyte (KB)] and FPS=33[number-of-times/second] are assumed. In the network environment, RTT=0.15[second] and BW=2[megabyte ([MB])/second] are assumed. In this case, the maximum transmission cancellation count CountMax is 28.

In a virtual desktop environment, DataSize=400[KB] and FPS=10[number-of-times/second] are assumed. In the network environment, RTT=0.3[second] and BW=500[KB/second] are assumed. In this case, the maximum transmission cancellation count CountMax is 8.

### (Example of Determination Procedure)

An example of a determination procedure by the image processing apparatus 101, at step S607 of FIG. 6 will be described with reference to FIG. 7.

FIG. 7 is a flowchart depicting an example of the determination procedure. In FIG. 7, the image processing apparatus 101 calculates an L1-norm as the similarity, based on image information Cap of an image to be displayed on the screen and on image information Next of an image to be displayed next on the screen (step S701).

The image processing apparatus 101 determines whether the similarity is less than a predetermined value (step S702). If the similarity is less than the predetermined value (step S702: YES), the image processing apparatus 101 transitions to the operation at step S706.

On the other hand, if the similarity is not less than the predetermined value (step S702: NO), the image processing apparatus 101 determines whether at least 200 ms have elapsed since the most-recent operation input (step S703). If at least 200 ms have elapsed (step S703: YES), the image processing apparatus 101 transitions to the operation at step S706.

On the other hand, if at least 200 ms have not elapsed (step S703: NO), the image processing apparatus 101 determines whether the transmission cancellation count Count is greater than the maximum transmission cancellation count CountMax (step S704). If the transmission cancellation count Count is greater (step S704: YES), the image processing apparatus 101 sets Count to 0 (step S705) and determines to transmit image information Cap of an image to be displayed on the screen (step S706), ending the determination process.

On the other hand, if the transmission cancellation count Count is not greater than the maximum transmission cancellation count CountMax (step S704: NO), the image processing apparatus 101 sets Count to Count+1 (step S707) and determines not to transmit the image information Cap of the image to be displayed on the screen (step S708), ending the determination process.

In place of the operation at step S701, the image processing apparatus 101 may specify a first area whose display content is updated when the screen is updated based on the image information Cap and a second area whose display content is updated when the screen is updated based on the image information Next. In place of the operation at step S702, the image processing apparatus 101 may determine whether the first area is not encompassed by the second area. In this case, the image processing apparatus 101 transitions to the operation at step S703 if the first area is encompassed, and transitions to the operation at step S708 if the first area is not encompassed.

### (Example of Display Procedure)

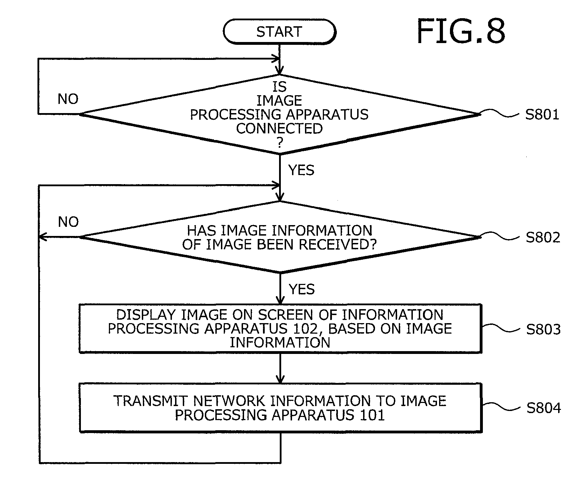

An example of a display procedure by the information processing apparatus 102 will be described with reference to FIG. 8.

FIG. 8 is a flowchart depicting an example of the display procedure. In FIG. 8, the information processing apparatus 102 determines whether the information processing apparatus 102 is connected to the image processing apparatus 101 via the network 110 (step S801). If the information processing apparatus 102 is not connected (step S801: NO), the information processing apparatus 102 returns to the process of S801.

On the other hand, if the information processing apparatus 102 is connected (step S801: YES), the information processing apparatus 102 determines whether the information processing apparatus 102 has received image information of an image (step S802). If image information has not been received (step S802: NO), the information processing apparatus 102 returns to the operation at step S802.

On the other hand, if image information has been received (step S802: YES), the information processing apparatus 102 displays an image on the screen of the information processing apparatus 102, based on the received image information (step S803). The information processing apparatus 102 transmits network information to the image processing apparatus 101 (step S804), and returns to the operation at step S802.

As described above, according to the image processing apparatus 101, whether image information of a preceding image is to be transmitted to the information processing apparatus 102 may be determined, based on the image information of two images, which are consecutive in the display order and are to be displayed on the screen of the information processing apparatus 102. Consequently, the image processing apparatus 101 can omit transmission of image information of a preceding image to thereby reduce the amount of data to be transmitted, when the user of the information processing apparatus 102 will experience a minimal feeling of strangeness even though the information processing apparatus 102 omits display of the preceding image.

Thus, the image processing apparatus 101 can reduce the load on the network to utilize the network with high efficiency. The image processing apparatus 101 can reduce the processing load of the information processing apparatus 102. The image processing apparatus 101 can suppress interruption of screen updating at the information processing apparatus 102, occurring as a result of a discarding of image information of the image arising from a packet loss. The image processing apparatus 101 can suppress the occurrence of packets awaiting transmission and thus, suppress decreases in response performance with respect to the information processing apparatus 102.

The image processing apparatus 101 can suppress network congestion such as in a case where the image processing apparatus 101 is connected to the information processing apparatus 102 via a low-quality network. The image processing apparatus 101 can suppress increases in the network usage fee in a case where the image processing apparatus 101 is connected to the information processing apparatus 102 via a network in which the usage fee increases as the amount of transmitted data increases.

According to the image processing apparatus 101, the similarity between two images is calculated based on information of each image to enable determination of whether image information of a preceding image is to be transmitted to the information processing apparatus 102, based on the calculated similarity. In other words, the image processing apparatus 101 can determine not to transmit image information of a preceding image, in a case where a subsequent image similar to the preceding image becomes an object of display immediately after the preceding image has become the object of display. As a result, the image processing apparatus 101 can determine that image information of the preceding image is not to be transmitted in cases where the user of the information processing apparatus 102 will experience a minimal feeling of strangeness even though the information processing apparatus 102 omits display of the preceding image.

According to the image processing apparatus 101, image information of a preceding image is not transmitted when an area in which display contents change according to the preceding image is encompassed by an area in which display contents change according to the subsequent image. In other words, the image processing apparatus 101 determines not to transmit image information of a preceding image in a case where the preceding image is overwritten by the subsequent image. As a result, the image processing apparatus 101 can determine not to transmit image information of the preceding image in cases where the user of the information processing apparatus 102 will experience a minimal feeling of strangeness even though the information processing apparatus 102 omits display of the preceding image.

According to the image processing apparatus 101, image information of an image representing a screen whose display content is updated in response to an operation input from the information processing apparatus 102 is periodically obtained, whereby it can be determined for each set of two images whose image information is obtained consecutively, whether image information of the preceding image thereof is to be transmitted. Thus, the image processing apparatus 101 can determine whether to transmit image information, for each of a series of images which are consecutive in the display order.

According to the image processing apparatus, the elapsed time from the most-recent receipt of an operation input is measured whereby the image processing apparatus is able to determine that the image information of a preceding image is to be transmitted to the image processing apparatus 102 when the measured elapsed time is the predetermined time or greater. As a result, the image processing apparatus 101 can transmit image information of an image in the case of display of a series of similar images or in the case of receipt of operation input such as a request to play back a video in which the same area continues to be updated in the screen.

According to the image processing apparatus 101, the number of times that the image processing apparatus 101 consecutively determines not to transmit image information is counted whereby the image processing apparatus 101 is able to determine that the image information of a preceding image is to be transmitted to the information processing apparatus 102 when the counted number of times is the predetermined count or greater. As a result, the image processing apparatus 101 can transmit image information of an image in the case of display of a series of similar images or in the case of receipt of operation input such as a request to play back a video in which the same area continues to be updated in the screen.

A conventional image processing apparatus may periodically obtain image information of an image to be displayed on a screen of the information processing apparatus 102 and transmit the image information each time image information is obtained. In this case, however, packet loss may occur with the increased load on the network.

For this reason, as a result of the packet loss of image information of the image #4 when the conventional image processing apparatus attempts to transmit image information of each image depicted in FIG. 4, the information processing apparatus may stop for a certain time, with the image #3 being displayed on the screen of the information processing apparatus. Accordingly, the user of the information processing apparatus may experience a feeling of strangeness during the image updating of the information processing apparatus.

On the other hand, the image processing apparatus 101 according to the present embodiment can omit transmission of image information of a preceding image to reduce the amount of data to be transmitted in cases where the user of the information processing apparatus 102 will experience a minimal feeling of strangeness even though the information processing apparatus 102 omits display of the preceding image. Thus, the image processing apparatus according to the present embodiment can suppress interruption of screen updating in the information processing apparatus 102.

The image processing method described in the present embodiment may be implemented by executing a prepared program on a computer such as a personal computer and a workstation. The program is stored on a computer-readable recording medium such as a hard disk, a flexible disk, a CD-ROM, an MO, and a DVD, read out from the computer-readable medium, and executed by the computer. The program may be distributed through a network such as the Internet.

### EXPLANATIONS OF LETTERS OR NUMERALS

- 101: image processing apparatus
- 102: information processing apparatus
- 301: obtaining unit
- 302: determining unit
- 303: transmitting unit

## Claims

1. An image processing program causing a computer to execute a process comprising:
determining based on image information of two images, whether to transmit to an information processing apparatus, image information of a preceding image among the two images that are consecutive in display order and to be displayed on a screen of the information processing apparatus connected via a network; and
transmitting image information of the preceding image to the information processing apparatus when determining to transmit image information of the preceding image.

2. The image processing program according to claim 1, the process further comprising
calculating a similarity between the two images, based on the image information of the two images, wherein
the determining includes determining based on the calculated similarity, whether to transmit the image information of the preceding image to the information processing apparatus.

3. The image processing program according to claim 1 or 2, the process further comprising:
specifying, in the screen, a first area whose display content is changed by displaying the preceding image on the screen; and
specifying, in the screen, a second area whose display content is changed by displaying on the screen, a subsequent image among the two images, wherein
the determining includes determining not to transmit image information of the preceding image when the first area is encompassed by the second area.

4. The image processing program according to any one claims 1 to 3, the process further comprising
periodically obtaining image information of an image representing the screen whose display content is updated in response to an operation input from the information processing apparatus, wherein
the determining includes determining for each set of two images whose image information is consecutively obtained, whether to transmit the image information of a preceding image among the set of two images, based on image information of the set of two images.

5. The image processing program according to claim 4, the process further comprising
measuring an elapsed time from a most-recent receipt of the operation input, wherein
the determining includes determining to transmit image information of the preceding image to the information processing apparatus when the measured elapsed time is at least a predetermined time.

6. The image processing program according to claim 4 or 5, the process further comprising
counting a number of consecutive determinations not to transmit the image information, wherein
the determining includes determining to transmit the image information of the preceding image to the information processing apparatus when the counted number of consecutive determinations is at least a predetermined count.

7. An image processing method comprising:
determining by a computer and based on image information of two images, whether to transmit to an information processing apparatus, image information of a preceding image among the two images that are consecutive in display order and to be displayed on a screen of the information processing apparatus connected via a network; and
transmitting by the computer, image information of the preceding image to the information processing apparatus when determining to transmit image information of the preceding image.

8. An image processing apparatus comprising:
a determining unit configured to determine based on image information of two images, whether to transmit to an information processing apparatus, image information of a preceding image among the two images that are consecutive in display order and to be displayed on a screen of the information processing apparatus connected via a network; and
a transmitting unit configured to transmit image information of the preceding image to the information processing apparatus when determining to transmit image information of the preceding image.
